(19) Europäisches Patentamt

European Patent Office

Office européen des brevets

(11) **EP 2 522 980 A2**

(12) **EUROPEAN PATENT APPLICATION**

(43) Date of publication:
**14.11.2012 Bulletin 2012/46**

(51) Int Cl.:
*G01N 3/00* (2006.01)     *G01N 3/38* (2006.01)

(21) Application number: **12164334.0**

(22) Date of filing: **25.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.01.2009 GB 0901319**

(62) Document number(s) of the earlier application(s) in accordance with Art. 76 EPC:
**10702381.4 / 2 389 572**

(71) Applicant: **Illinois Tool Works, Inc.**
**Glenview, IL 60026 (US)**

(72) Inventors:
 • **Hayford, Paul**
  **Holmer Green, Hampshire HP15 6TL (GB)**

 • **Jeppesen, Benjamin**
  **High Wycombe, Buckinghamshire HP13 6DY (GB)**

(74) Representative: **Jennings, Michael John**
**A.A. Thornton & Co.**
**235 High Holborn**
**London, WC1V 7LE (GB)**

Remarks:
  This application was filed on 16-04-2012 as a divisional application to the application mentioned under INID code 62.

(54) **Apparatus, controller and method for adaptive control of an electromagnetic actuator**

(57)     Provided are a structure testing apparatus, a controller for such an apparatus and a method for controlling a structure testing apparatus in which operation of a direct drive electromagnetic actuator is continuously auto-tuned during a test, so that the test load applied to a specimen during the test is the correct, desired load according to the current specimen parameters including stiffness. Forward and feedback control gains are repeatedly recalculated during the test in response to monitored specimen parameters.

FIG. 3

EP 2 522 980 A2

**Description**

**FIELD OF INTENTION**

The present invention relates to electromagnetically-driven actuators for use in apparatus such as structure testing machines, and to methods for controlling such actuators and apparatus when testing the response of a structure to test loads and when controlling operations that need to take account of changing parameters of that structure.

The apparatus may be a materials testing machine for providing an assessment of one or more physical properties of a specimen material, or a structure or component testing machine for assessing the response of a structure or component to applied loads, or another apparatus that requires adaptive control.

**BACKGROUND**

In conventional materials testing machines, test loads are applied to a test specimen under the control of a monitored control system which forms part of the machine. An actuator is supported by a machine frame and, upon actuation, applies to the test specimen a test load in the direction of a predetermined axis. A controller is responsive to a controller input signal and a set of controller parameters to apply an actuating signal to the actuator. This actuating signal causes the actuator to subject the test specimen to a test load, which produces dimensional changes in the test specimen in the direction of the predetermined axis. Controllers can also be used to apply shear forces in a structure testing machine - applying torque via an actuator to a test structure that is held at two opposite ends.

The monitored control system normally used in materials testing machines is a closed loop system which includes a feedback path for feeding back condition signals representative of a predetermined condition of the test specimen. The condition signals show a result of applying a controller input signal to the controller, and a comparator responsive to an input demand signal and the condition signal generates a controller input signal representative of the difference between the input demand signal and the condition signal.

The controller normally takes the form of a proportional-integral-derivative controller (PID controller), which includes a control loop feedback mechanism providing a corrective signal for correcting a difference between a measured process variable and a desired value for that variable. The demand signal in a materials testing machine is a signal demanding a predetermined position (or displacement), a load, or an extension (strain) of the test specimen. That is, a particular measured variable is controlled to follow a commanded trajectory of values as closely as possible. In some cases, the feedback path includes a mode selection unit for feeding back condition signals representative of the position of, load on, or extension of the test specimen.

While such materials testing machines have been used for many years, their performance is lacking in some respects. In particular, the dynamic behaviour of such materials testing machines is affected by the stiffness of the test specimen. Sensitivity to specimen stiffness poses two problems. Firstly, the machine controller has to be re-tuned every time a different type of specimen is loaded. Typically, such retuning is done manually and, because this requires some skill, is sometimes done badly. Secondly, even if the machine controller is correctly tuned at the start of a test, stiffness changes during the test prevent optimum performance being maintained. Such stiffness changes are common. In metals testing, for example, damage mechanisms such as the propagation of fatigue cracks or transitions from elastic to plastic behaviour cause the stiffness to change. Other specimens - such as automotive elastomeric components - have an inherently non-linear stiffness characteristic.

How a stiffness change affects the testing machine depends upon the mode of control used for the test. In load-control, response becomes more sluggish as the stiffness of the specimen reduces. In strain-control the reverse happens; response becomes sharper but this can lead to closed-loop instability if the gain is too high.

Sensitivity to stiffness change depends on the fixed stiffness of the actuator and load-frame. The load-frame is designed to be stiff to minimise the strain energy stored when the specimen is loaded. Different actuators, on the other hand, have very different stiffness to suit varied requirements of speed, force and stroke. Sensitivity is worst in load control if the actuator is stiff. In strain control, machines fitted with soft actuators tend to be most affected.

A self-optimising PID controller has been proposed for use with machines having slowly or discontinuously varying parameters. The controller uses an impulse signal to determine system dynamics. A hill-climbing optimisation routine is then employed to find the best set of PID parameters. The method is principally aimed at initial auto-tuning. It has been suggested that it could be used during testing to re-tune the controller, but this would involve applying more impulse signals and a complete solution is not yet available for machines that include electromagnetic actuators.

Various self-tuning control systems for closed loop servo-hydraulic materials testing machines have also been proposed. In one proposal, the stated aim was to provide a self-tuning controller for servo-hydraulic materials testing machines which did not have to be manually tuned by the sort of 'trial and error' approach used on existing PID controllers. After several investigations, a pole-placement controller was adopted. Trials revealed that the system worked well as long as the demand signal was dynamically rich.

Repetitive control systems using a regeneration spectrum and developed for systems with periodic inputs have been applied to materials testing. This is a learning type of controller which, cycle by cycle, reduces errors caused by non-linearities. However, it is only suitable for periodic waveforms.

The above systems can be classified as self-tuning or learning type controllers. A disadvantage of the learning type controller is that it is specific to particular demand signals and types of test, and to extend the self-tuning controller to cope with stiffness changes requires the use of unwanted probing signals to estimate dynamics. Estimation is particularly difficult in materials testing where normal operating signals are not dynamically rich and where conventional probing is unacceptable because it would unacceptably influence the result of many tests.

US 5,511,431 discloses a structure testing machine for testing the response of a test structure to loads applied in the direction of a predetermined axis of the structure. An initial procedure identifies a number of necessary machine parameters for calculations that are required to set the forward path control gain of a PID controller. Tests are then carried out under the control of a monitored control system that adapts the machine to changes in the estimated stiffness of the test structure. An adaptive control loop comprises a stiffness estimator which generates, from dimensional changes in the test structure resulting from application of a test load, adaptive control signals representative of the structure stiffness as well as adaptive control signals representative of the combined stiffness of the actuator, the actuator support frame and the test structure. The PID controller parameters are updated to modify the forward path gain of the controller in response to the adaptive control signals. In this way, the machine is adapted to changes in the stiffness of the test structure relative to the combined stiffness of the machine and the test structure.

EP-A-0897110 discloses an electro-hydraulic materials testing machine that measures a mechanical property of a test piece based on a load given to the test piece and a mechanical change generated in the test piece, while using feedback to control the operation of a servo system including a hydraulic actuator for applying load to the test piece. The measured property (e.g. an estimated stiffness determined from an initial load and a measured initial displacement) is used to set the initial control gain for feedback control, and the control gain is adjusted based on a monitored property of the test material during testing (e.g. stiffness estimated from periodically detected load and mechanical changes during the test). In EP-A-0897110, the adjustment during testing relies on reading values from a look-up table. This is inflexible in that it can only deal with predictable changes in system parameters. That is, for a specific model of testing machine, gain values for a range of stiffness values may be determined and stored in a table, but a method that relies on a lookup-table of predetermined values cannot adapt to changes in other machine parameters.

International patent application WO 2008/023226 discloses a material testing machine with an electrically controllable actuator arranged to apply force to a specimen. Feedback control gains are calculated from a single monitored parameter value - stiffness. However, the calculations required for tuning the machine are mathematically complex and therefore slow to perform using current processors; the machine must be tuned before starting the test, and the controller gains then remain fixed.

US 3,206,652 disclosed an electromagnetically-actuated apparatus for applying controlled physical shocks to a specimen held in a movable specimen-holding carriage. US 3,206,652 mentions the need to shock-test various components and to simulate the operating conditions of components, for example components of modern aircraft and space vehicles that will experience G force pulses, to test their suitability before installation.

Plummer A.R., "Control techniques for structural testing: a review", Proceedings. of the Institution of Mechanical Engineers, Part I: Journal of Systems and Control Engineering, vol.221, No. 2, Mechanical Engineering Publications Ltd, London, UK, 1 March 2007, pages 139-169, reviewed a number of closed-loop and open-loop actuator control algorithms for dynamic testing of structures and components, focussing on electrohydraulic actuators and discussing PID control as well as repetitive and iterative control for electrohydraulic actuators.

Although some of the above-described solutions represented significant advances in the art, further difficulties remain. In particular, some of the known solutions can provide satisfactory results for servo-hydraulic systems (subject to issues such as high reliance on the initial tuning before testing begins) and yet they would fail to provide satisfactory results if applied to certain other types of test machines.

## SUMMARY

The inventor of the present invention has determined that improved automated controller tuning is required for structure testing machines that include an electromagnetically controlled actuator, and that there is a need for such apparatus to respond very quickly to changing specimen parameters, such as stiffness which can change significantly and non-linearly during a test. A specimen in this context may be any test material or structure or a component for which there is a requirement to assess one or more physical properties or of its behaviour under test conditions.

A first aspect of the invention provides a method for controlling a direct drive electromagnetic actuator within a structure testing machine, which actuator is arranged to apply loads to a test structure during a test, the method comprising: performing a test by controlling the electromagnetic actuator to apply loads to the test specimen, while monitoring both the applied loads and changes in one or more parameters of the test structure; and repeatedly calculating, during the test, control gains for a controller of the actuator in response to the monitored parameters.

A second aspect of the invention provides a structure testing apparatus, comprising: an electromagnetically driven actuator arranged to apply loads to a test structure; and an actuator controller for providing control signals to the actuator; wherein the actuator comprises a direct drive electric motor and the controller includes means for repeated automatic tuning of control gains during a test.

A third aspect of the invention provides a structure testing apparatus, comprising: an electromagnetically driven actuator arranged to apply loads to a test structure; and an actuator controller for providing control signals to the actuator, wherein the controller includes means for repeated automatic tuning of a plurality of control gains, including at least one control gain that acts in the feedback path, during a test.

A fourth aspect of the present invention provides a method for controlling an electromagnetic actuator within a structure testing machine, which actuator is arranged to apply loads to a test specimen during a test, the method comprising: performing a test by controlling the electromagnetic actuator to apply loads to the test specimen, while monitoring both the applied loads and changes in one or more parameters of the test specimen; and repeatedly calculating, during the test, control gains for a controller of the actuator in response to the monitored parameters, including repeatedly calculating at least one gain that acts in the feedback path.

Aspects of the invention provide continuous automatic tuning of a controller of an electromagnetically-driven actuator of a structure testing machine during a test in which loads are applied to a test specimen. This can greatly improve the performance of the test machine so as to apply a desired load to the test specimen and to control the displacement, load or strain with speed, accuracy and stability. The 'continuous' tuning in this context includes repeated performance of automatic calculation of control gains during a test, where the repeated automatic tuning approximates continuous tuning. For example, the automated calculations may be repeated every few milliseconds.

In one embodiment, a method of controlling an electromagnetic actuator comprises:

setting initial control gains for a controller of the electromagnetic actuator;
performing a test by controlling the electromagnetic actuator to apply loads to the test specimen, while monitoring both the applied loads and changes in one or more parameters, including stiffness, of the test structure; and
during the test, repeatedly performing an automated calculation of forward control path and feedback control path gains for the controller of the electromagnetic actuator based on the monitored one or more parameters, thereby to correct the applied load towards a desired load.

The electromagnetic actuator is preferably a direct-drive linear or rotary electric motor actuator, in which an electric current is used to generate magnetic forces that directly apply a load (linear force or torque) to the moving part of the motor. Previously, adaptive tuning of structure testing machines has been applied to servo-hydraulic systems, which have relatively stable dynamics and achieve a steady actuator speed in response to a command input, whereas testing machines based on direct-drive linear motors have only implemented an initial controller tuning that remains fixed during a test. This is partly because of the complexity of auto-tuning a structure testing machine that includes direct-drive electric motor actuation.

Although adaptive correction has been applied to a servo-hydraulic system, and a proposal was made to also apply this to electric motors, the machines available at the time of that proposal used indirect-drive rotary motors with ball screws or some other geared arrangement to generate linear motion or a slower rotary movement. Such machines may include a type of velocity feedback in the form of a 'tacho' measurement that is fed back to the drive amplifier, but this is a fixed type of feedback, whose gain is typically set by means of a resistor in the electronic circuit. The proposed adjustment of gains during a test only involved scaling up or down of the proportional and integral feedback gains, which does not fully address stiffness changes during a test. In brief, known solutions did not disclose an automated, repeated recalculation of control gains suitable for stable control of a direct-drive electric motor.

The present invention enables repeated recalculation of control gains for a controller of a structure testing machine's actuator, including a velocity feedback control gain $K_v$. The invention enables continuous automatic tuning of structure testing machines that employ direct-drive linear and rotary motors, which have much less stable dynamics and can reach higher speeds than comparable servo-hydraulic systems.

In one embodiment of the invention, the automatic repeated calculation of the control gains comprises periodically performing a predefined set of separate calculation steps, each of which steps is performed within one or more predefined processor clock cycles of a predefined plurality of processor clock cycles, and repeating the set of steps after the predefined plurality of processor clock cycles. In one embodiment, the calculation is repeated every 14 ms, although this can be reduced by using a faster processor.

By dividing complex control gain calculations into a set of steps corresponding to a predefined number M of clock cycles, and by assigning each of the total set of N operations involved in recalculating the control gains to particular clock cycles within the sequence M, the recalculation can be repeated every M clock cycles for continuous auto-tuning of the structure testing machine (or can be repeated after some other predefined number of cycles which is greater than M, or even a smaller predefined number if parallel processing is used). Each step may be limited to include a maximum of one computationally complex function (or some other maximum number) - such as a maximum of one function call, divide operation, trigonometric operation, square root or other mathematically complex function. Alternatively, depending on the processor used, a plurality of computationally complex operations may be performed in a single clock cycle or some functions may require more than one clock cycle to complete.

The step of setting initial control gains may comprise applying predefined default controller gains for position, load and strain control, where these default gains are known to be stable for all values of specimen stiffness. That is, active control is implemented even before specimen parameters are known. Typically, the default values will not achieve optimum response times but are adequate to control the actuator accurately while specimen parameters are determined and optimum gain values calculated. In other embodiments, the stiffness of the load string is calculated and used to determine initial control gains. Other parameters may also be used.

The inventor of the present invention has determined that ideal values of the controller gains Kp, Ki and $K_v$, and the balance between them, vary continuously as the specimen stiffness changes and so control gains should be repeatedly recalculated during a test by monitoring the load string stiffness (stiffness of specimen and testing apparatus). When operating in strain control mode, an extensometer is also used to calculate specimen stiffness. Specimen stiffness is defined as the gradient of the force/extension curve of a specimen under test, where the force is applied to the test specimen and the extension measured is the local extension to the component under test, typically measured using an extensometer as is known in the art. Load string stiffness is defined as the gradient of the force/extension curve during a test, where the force is applied to the test specimen and the extension measured is the displacement of the combined structure of specimen and machine.

The forward path control gains preferably comprise proportional (Kp) and integral (Ki) control gains, and the feedback control gain preferably comprises a velocity feedback control gain ($K_v$). The velocity feedback can improve system damping for electric motor actuators that are inherently very lightly damped. A lightly damped actuator, in combination with a mechanical test specimen, tends to oscillate with a resonance in the range 1-100Hz, which is within a useful frequency range for the performance of tests such that the resonance can easily be excited to create an unstable system.

In one embodiment, the invention provides adaptive control in a plurality of control modes - displacement, load and strain control. In one embodiment, the control parameters on all control channels are updated simultaneously so that if the user wishes to change from position control to load control, for example, the controller is already set up correctly. A load control mode involves control of the force being applied to a test specimen, which may be in tension or compression, and which is measured by a load cell. A strain control mode involves control of the local extension of a specimen material, which may be measured by an extensometer.

The plurality of steps into which the control gain recalculations are divided may be accompanied by a pre-calculation step (or set of steps) for determining one or more structure testing machine parameter values. In one embodiment, the pre-calculation step accounts for the time delay of the control loop and/or internal damping per unit specimen stiffness, in addition to stiffness.

The recalculation of control gains preferably comprises using one or more compensators. That is, the materials test machine controller according to one embodiment uses Kp and Ki control gains, together with lead-lag and 'notch filter' compensators, in the forward path. These gains and compensation are applied to an error signal (resulting from comparing a demand signal with achieved values) in position, load or strain modes. A further control gain and compensator in the feedback path is applied to feedback signals including velocity (or velocity estimated from position) and acceleration. The lead-lag, notch filter or other types of compensator are used to 'compensate' for undesirable dynamic behaviour in the rest of the system, e.g. time delays, continuous lags in response or sensor measurements, or resonances from other sources not modelled in the auto-tuning calculations. The gains in the compensators will therefore often be fixed while the auto-tuning calculation just varies Kp, Ki and Kv. In other embodiments, the auto-tuning calculation changes the values of compensator gains as well, particularly to achieve higher Kv values. A fixed 'system notch filter' as a compensator in the forward path is generally adequate to avoid exciting higher frequency resonances, and a fixed averaging filter as a compensator in the feedback path is generally adequate to avoid amplifying sensor noise in the calculation of velocity feedback.

Another aspect of the invention provides a controller for controlling an electromagnetic actuator within a structure testing machine, wherein the structure testing machine includes: an electromagnetic actuator for applying load to a test specimen; a load detector for monitoring the load applied to the test specimen; and monitoring apparatus for monitoring changes in one or more parameters, including stiffness, of the test specimen during a test; wherein the controller comprises: means for controlling the actuator to apply load to a test specimen within the structure testing machine; means for repeatedly performing, during the test, an automated calculation of a plurality of control gains, including at least one gain that acts in the feedback path, for the controller based on the monitored one or more parameters; and means for applying the calculated gains within the controller to repeatedly tune operation of the actuator during the test.

One embodiment of the invention provides a controller for controlling a direct drive electromagnetic actuator within a testing machine, wherein the testing machine includes: an electromagnetic actuator for applying load to a test specimen; a load detector for monitoring the load applied to the test specimen; and monitoring apparatus for monitoring changes in one or more parameters, including stiffness, of the test specimen during a test; wherein the controller comprises:

means for controlling the actuator to apply load to a test specimen within the structure testing machine;
means for repeatedly performing, during the test, an automated calculation of forward control path and feedback control path gains for the controller based on the monitored one or more parameters; and
means for applying the calculated gains within the controller to continuously tune operation of the actuator during the test.

A controller as described above may be implemented using computer program code recorded on a machine readable recording medium (a 'computer program product'). The program code is executable by a processor within the structure testing machine to control operation of the actuator during a test. A computer program for implementing the invention may include program code for execution by the processor to repeatedly perform, during the test, an automated calculation of forward control path and feedback control path gains, based on the monitored one or more parameters of the test specimen. The controller generates an automatically tuned control signal for continuous adaptive control of the actuator in response to the monitored one or more parameters.

A further aspect of the invention provides a structure testing machine including:

a test specimen holder;
an electromagnetic actuator for applying loads to a test specimen held by the holder;
a load detector for monitoring the load applied to a test specimen;
monitoring apparatus for monitoring the test specimen as load is applied; and
a controller for controlling the actuator to apply load to a test specimen;
wherein the controller is adapted to repeatedly perform, during the test, an automated calculation of forward control path and feedback control path gains for the controller based on the monitored one or more parameters, and is adapted to apply the calculated gains to continuously tune operation of the actuator during the test.

Unlike known test machine controllers, the controller and method of the present invention can repeatedly recalculate all gains during structure testing, within a predefined number of processor clock cycles, enabling continuous or near-continuous auto-tuning and enabling deterministic completion times for each repeated calculation of control gain values. Dividing complex mathematical operations into a plurality of steps that can each be completed in a single processor clock cycle or a predefined number of cycles ensures that no operation will time out, and this enables the process to be repeated every P clock cycles for continuous auto-tuning.

This improvement was not required for standard servo-hydraulic actuators, because position control that is tuned with no specimen is relatively immune to the addition of specimens of varying stiffness, while if the system is tuned correctly for the initial specimen stiffness in load or strain control, control gain adjustments during the test that are proportional to changes in stiffness have been found to be sufficient. However, a materials testing machine actuator driven by a linear or rotary direct drive electric motor responds to input signals in a very lightly damped manner and is inherently less stable than a servo-hydraulic system.

The inventor of the present invention has achieved continuous auto-tuning of an electromagnetically-driven actuator, such as an actuator driven by a linear or rotary electric motor that may be implemented in a structure testing machine. Some of the embodiments of the invention described herein are not limited to structure testing applications, and are applicable to actuators implemented within other apparatus that requires adaptive control in response to changing parameters of a structure to which forces are being applied. One aspect of the invention thus provides an apparatus comprising: an electromagnetically-driven actuator comprising a direct drive electric motor arranged to apply loads to a structure; and an actuator controller for providing control signals to the actuator, and configured to repeatedly calculate actuator control gains during operation of the actuator, in response to monitored changes in one or more parameters of the structure which changes result from the forces applied to the structure.

A further aspect of the invention provides a method for controlling an electromagnetically-driven actuator, comprising a direct drive electric motor arranged to apply forces to a structure, the method comprising: providing control signals to the actuator and performing an operation using the actuator, to apply forces to a structure, while monitoring changes in one or more parameters of the structure which changes result from the forces applied to the structure; and repeatedly calculating actuator control gains during performance of the operation, in response to the monitored changes in one or more parameters.

In one embodiment, apparatus and methods that are adapted for applications other than materials testing benefit from the above-described automatic repeated calculation of a velocity feedback control gain (to provide adequate damping and hence to maintain stability), while also automatically recalculating forward path control gains including a proportional gain and an integral gain, in response to changing parameters such as stiffness. This automatically maintains a system response that is appropriate for the changing parameters.

Another embodiment provides a method for controlling an electromagnetic actuator, such as within a structure testing machine, which actuator is arranged to apply forces to a structure (e.g. a specimen test structure in a structure testing machine), the method comprising: providing actuator control signals to the electromagnetic actuator and performing an operation using the actuator to apply forces to a structure, while monitoring changes in one or more parameters of the structure which changes result from the forces applied to the structure; and repeatedly calculating actuator control gains during performance of the operation, in response to the monitored changes in one or more parameters; wherein the electromagnetic actuator is a direct-drive electric motor or a low-geared indirectly-driven electric motor. Direct-drive and low-geared indirectly-driven actuators share the characteristic of lightly damped dynamic behaviour, and so they both benefit from the abaility to rapidly and repeatedly recalculate control gains during performance of an operation and in rresponse to changing parameters of the structure to which forces are being applied, such as during a test carried out by a structure testing apparatus.

## BRIEF DESCRIPTION OF TABLE 1 AND DRAWINGS

Embodiments of the invention are described below in more detail, by way of example, with reference to the accompanying table of parameter definitions and drawings in which:

TABLE 1 is a list of control parameter names, physical units and definitions. The parameters are referred to in the detailed description of the embodiments.

FIG. 1 is a schematic representation of a materials testing machine in which the present invention may be implemented;

FIG. 2 is a schematic block diagram of a materials testing machine in which the invention can be implemented;

FIG. 3 is a block diagram representing a controller according to an embodiment of the invention;

FIG. 4 is a flow diagram representing, in overview, a method of tuning a test machine; it uses parameter names defined in TABLE 1 and the rectangular blocks are numbered steps in the calculation that are referred to in the detailed description of the embodiments.

FIG. 5 is a graph showing the force-displacement characteristic curves for a non-linear rubber test specimen;

FIG. 6 shows the results of on-line stiffness estimation for the non-linear rubber specimen;

FIG. 7 shows the achieved position waveforms for cyclic testing of the non-linear rubber specimen for both fixed tuning and adaptive tuning of an actuator controller;

FIG. 8 shows the tracking errors for both the fixed tuning and adaptive tuning of a controller, for cyclic testing of the non-linear rubber specimen;

FIG. 9 shows the load-displacement curves for a copper wire pull test using each of a fixed controller tuned to initial wire stiffness and an adaptively-tuned controller. The fixed controller enters an unstable limit cycle after the specimen yields (stiffness decreases)

FIG. 10 shows the results from FIG. 9 during the first millimetre of extension, so the effect of the instability on the measured load-displacement curve can be seen in detail.

FIG. 11 shows the achieved extension rate during the first half a second of the copper wire pull tests depicted in FIG.9 and FIG.10, including the undesirable oscillation when using fixed tuning and the near-linear result achieved by an adaptive controller. These extension rates were estimated from the measured displacements.

FIG. 12 shows an estimate of the specimen stiffness variation during the first half a second of the copper wire pull test with Adaptive Control also depicted in FIG. 9, FIG. 10 and FIG. 11. It shows clearly how the stiffness is high at the beginning of the test, but later decreases to a very low value (as the specimen 'yields'). The instability in the system with fixed control starts after this yield point. The stiffness values in FIG. 12 were estimated after the test from measured load and displacement data.

## DESCRIPTION OF EMBODIMENT

Mechanical testing is often divided notionally into 'Static' and 'Dynamic' testing. Static testing increases the load or displacement on a test specimen gradually in order to plot a load-displacement curve or measure the ultimate strength of the component. Dynamic testing is intended to apply loads quickly or cyclically in order to prove fatigue life of the specimen. In dynamic testing, it is important to be able to recreate the rates of change of load that the specimen would experience in its real-life application.

The technologies used to achieve these two types of testing may vary according to the application. However, in a wide range of cases, cost and convenience have led static testing to be done by rotary electric motors, which convert their rotary motion to linear motion by means of ball screws. The gearing effect of the ball screws allows large loads to be achieved, while limiting the static load and electrical requirements on the motors. Bandwidth is limited due to this gearing to the order of 1Hz, however.

Dynamic testing involves much higher bandwidths, stretching into the kilohertz range for some elastomeric testing. Servohydraulics began to be used in the 1960s for dynamic and structural testing and have become the predominant technology due to several desirable characteristics: high force density (no gearing required); high bandwidth of the servo valves; ease of power distribution via hydraulic lines; modular, scalable and interchangeable components, for example power packs, valves, actuators, accumulators; and straightforward control of actuator position using traditional PID controllers.

There are some disadvantages to hydraulics, however. Firstly, there is some actuator friction due to hydraulic seals on pistons. Secondly, there is a potential for contamination of specimens due to hydraulic oil leaks. Thirdly, there are maintenance requirements (e.g. regular changes of hydraulic oil and filters). Also, the cooling/power requirements and noise generated by their power packs is undesirable, and the power packs must often be housed in a separate room with cooling water from a cooling tower or outside air-blast cooler.

An alternative technology for dynamic testing is the 'direct drive' brushless linear (as opposed to rotary) electric motor. It has advantages and disadvantages compared to a servohydraulic actuator. The advantages include the lack of contamination issues due to hydraulic oil and the fact that the electrical supply is easier to connect than hydraulic actuation. The contactless (brushless) operation eliminates brush wear problems and achieves low friction levels, and the force produced by such a system is proportional to the current in the motor coils and so gives a very linear performance.

An alternative application of the invention is in a 'low-geared' ball-screw-driven apparatus, such as an indirectly-driven structure testing machine. Such machines can provide high load capability and better dynamic performance than traditional ball-screw-driven machines. Since their dynamic behaviour is closer to a direct-drive actuator than conventional ball-screw-driven machines, the present invention can be usefully applied to such low-geared screw-driven systems.

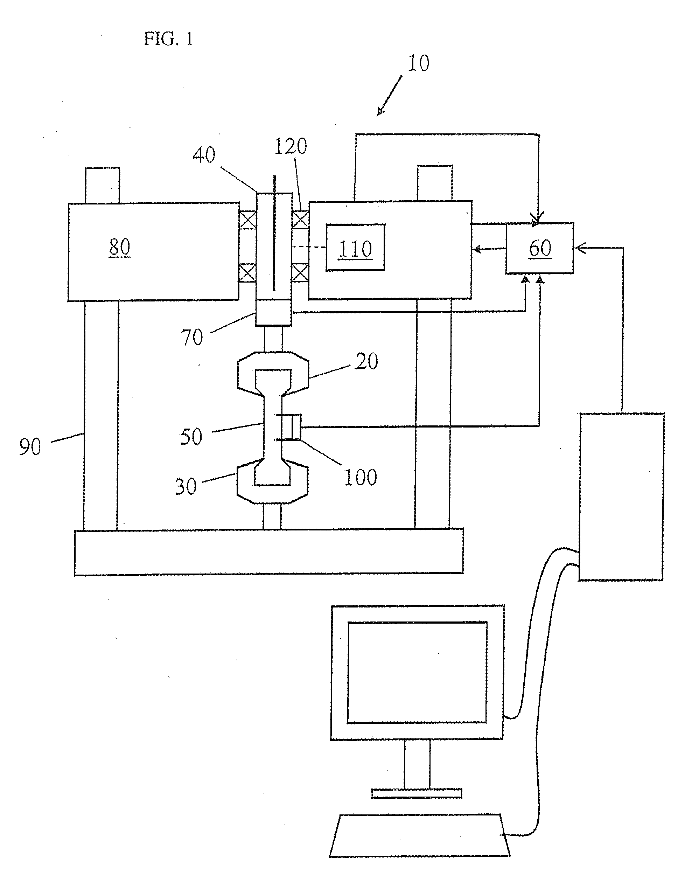

An example materials testing machine 10 as shown in FIG. 1 comprises a pair of opposed specimen holder grips 20,30 and an actuator 40 for applying loads to a specimen 50 held within the grips. The actuator in this example testing machine is a brushless linear electric motor, and is controlled by an automatically tuned controller 60 as described below. A load cell 70 connected to the actuator measures loads applied to the specimen. The actuator is supported by a crosshead 80 held on a support frame 90 of the machine. An extensometer 100 can be used to precisely measure strain within a test specimen. One or more sensors 110 such as digital encoders or linear variable differential transformers (LVDTs) measure the position and velocity of the actuator. Such systems are known in the art.

An example of a structure testing machine using a direct drive linear electric motor as the actuator is the ElectroPuls™ E1000 1kN materials testing machine from Instron™. Instron is a division of ITW Limited. The machine offers control bandwidth comparable to more traditional servo-hydraulic test machines, while dramatically improving ease-of-use for the end user, by eliminating the need for hydraulic power supplies and their maintenance, and simplifying the tuning process for the user.

Known systems based on electric motors as the actuation technology have various disadvantages as well as the above-mentioned advantages, when compared with conventional servohydraulic systems. The typically higher moving mass for an equivalent generated force may limit acceleration compared to hydraulics. The heating effects of the motor also need to be considered. Most significantly, actuator position and the application of load to a test specimen are harder to control.

The dynamic behaviour of a test machine with 'direct drive' electric actuator acting on a test specimen is dominated by the resonance created by the moving mass or inertia of the motor connected to the stiffness of the test specimen. There is very little 'damping' in the system because most materials have little internal damping, while the electric motor actuator has little damping except for a small amount due to friction in the bearings and electromagnetic 'back-emf' effects. This means that the resulting resonance is very oscillatory (lightly damped). This resonance is generally in the range 1-100Hz, which is within the range where tests are to be performed.

It is therefore very important to tune the controller carefully to control or alternatively avoid exciting this resonance and creating an unstable system. Use of the standard proportional controller gain Kp alone results in a dynamic system that is only stable if a large gain is avoided, as large gain quickly produces instability. Low gain values produce a system with an unacceptably slow response for materials testing. The integral gain Ki helps for stiff specimens but further destabilizes compliant specimens.

A resonance may be controlled by introducing the velocity feedback gain, Kv, to improve system damping. However, this generally only works in the low to mid frequency range due to phase lag caused by the system 'time delay'. This delay includes the processing time in the controller and the time taken by the power amplifier to generate a target current in the motor. This delay may be significant (e.g. several ms), and longer than the equivalent time to adjust the servo valve in a servohydraulic system. The stable range of values for the Kp and Ki gains depend on the value of Kv. If the specimen stiffness changes significantly, the natural (resonant) frequency changes. If the controller is not retuned, an unstable system may result. In many tests, the specimen stiffness does change significantly. Some examples of realistic typical test scenarios that would benefit from continuous updating of control (on a structure testing machine employing a direct drive electric motor actuator) are:

- A 'single-shot' test where a specimen is placed in tension, becomes 'ductile' with reducing stiffness and finally breaks
- a specimen that shows repeatable changes in stiffness during a cyclic test - there may be increasing stiffness, for example during compression of sports shoe sole, or decreasing stiffness, for example 'low cycle fatigue' of a metallic specimen.
- Cyclic compression of sports shoe sole or rubber bush for an automotive suspension, where the specimen becomes stiffer as it is compressed.
- Cyclic testing of metallic materials in 'low-cycle fatigue', where the material becomes 'plastic' with much reduced stiffness at the extreme values of cyclic loading.
- 'pulse' testing where the actuator comes out of contact with the specimen and then moves quickly to make contact and compress it to target loading. The range of stiffness is from zero (no contact) to very stiff in a short timescale. Examples are testing of valves or printing press components.

In contrast, the stability of a servo-hydraulic system is not so sensitive to changes in stiffness of the test specimen. The moving mass or inertia of the actuator is always connected to the stiffness of the oil column in addition to that of the specimen. Therefore, the stiffness is always relatively high. In addition, the moving mass or inertia in a hydraulic actuator tends to be low compared to that for an equivalent electric motor actuator. These differences combine to make the natural frequency of the resonance much higher, typically 200Hz. This is above the typical frequency range of interest in the test, so the controller does not tend to excite it. The flow of hydraulic fluid through orifices also tends to damp out oscillatory motion. Finally, the response times of servo valves are typically much faster than those of a power-amplifier-motor combination, so the controller 'time delay' is smaller and the system has a higher controllable bandwidth - this makes it easier to tune the controller and avoid exciting resonances. In position control, it is not generally needed to tune the controller differently for any type of specimen. In load and strain control, specific tuning is helpful to give a fast response but it is generally sufficient to adjust Kp (and to a lesser extent Ki) to achieve this. There is no need for a Kv term, so the tuning process is much simpler overall. In summary, 'adaptive' control is rarely needed for a servohydraulic system. The initial tuning is generally sufficient for typical changes in specimen stiffness.

In a structure testing machine with a direct drive electric motor actuator, the continuous updating of controller gains requires two processes to be calculated quickly and regularly:

1. The 'load string stiffness' (and 'specimen stiffness' for strain control) must be estimated
2. The stiffness value(s) must be used to calculate controller gains.

The estimation of stiffness values is not trivial, but a procedure for adaptive control is already known from US patent No. 5511431 and Clarke, D.W., and Hinton, C.J., "Adaptive control of materials-testing machines", Automatica, Vol.33, No.6, pp1119-1131, 1997, Elsevier Science Ltd, UK. For a servohydraulic system, it is sufficient to adjust the Kp and Ki terms in a way that is directly proportional or inversely proportional to the change in estimated stiffness values. The simplicity of this calculation means that processor time is not an issue. The calculation is able to be repeated on some known materials test machine controllers in a single 1ms clock cycle, with stiffness values updated every 1ms.

However, for the reasons given earlier, automatic tuning of a controller is more difficult for a test machine actuator that is driven by an electric motor. The ideal values of the key controller gains Kp, Ki and Kv and the balance between them vary continuously as the specimen stiffness changes. Equations to calculate them based on the stiffness and other known system parameters were developed and described in WO 2008/023226. However, the equations as derived are complex, mathematically, involving a number of operations that are slow to process in standard computer processors, e.g. divides, square-roots and trigonometric functions. This calculation is too time-consuming to run every 1ms in conventional controllers.

Thus, although a system based on a linear motor can in general use the same or similar digital controller hardware and feedback sensor as has been used in servohydraulic systems, the controller and tuning calculations of the present embodiment are significantly different from known systems.

Table 1 below provides a list of control parameter names, physical units and definitions. These parameters are referred to in the detailed description of embodiments below.

**TABLE 1**

| Parameter name | Units | Description | Source |
|---|---|---|---|
| Ks | N/m | Load string stiffness [stiffness measured of specimen in parallel with frame and fixtures] | Estimated using automatic procedure or entered by user |
| Kx | N/m | Specimen stiffness [stiffness measured of that part of the specimen within an 'extensometer'] | Estimated using automatic procedure or entered by user. If not known, set Kx=Ks. |
| Ms | kg | moving mass | factory-set |
| Cmin_K | s | Minimum expected specimen damping per unit stiffness | factory-set |
| Cm | N | motor constant, the largest force that the motor can produce | factory-set |
| Cb | $m^{-1}s$ | damping parameter for motor, such that Cb*Cm is damping coefficient | factory-set |
| Tdelay | s | delay in feedback control loop | factory-set |
| PM_vel | rad | target phase margin, velocity feedback | factory-set |
| GM_vel | n/a | target gain margin, velocity feedback | factory-set |
| PM | rad | target phase margin, feedback of controlled variable (position, load or strain) | factory-set |
| GM | n/a | target gain margin, feedback of controlled variable (position, load or strain) | factory-set |
| TkiMin | s | Maximum time constant allowed for removing steady-state error. This is used to calculate a lower limit on the integral gain, Ki. | factory-set |
| Mcell | kg | 'End mass' that may be present between the load cell measuring element and the specimen | factory-set |
| maxStrainGainAmp | n/a | Maximum control amplification factor allowed for strain control relative to position control. | factory-set |

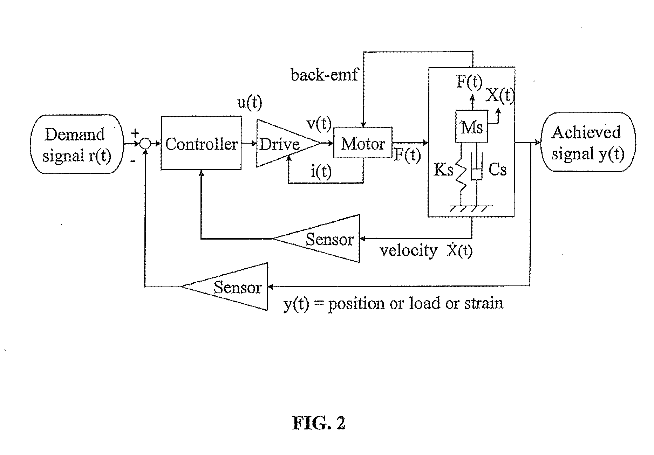

FIG. 2 is a schematic representation of a materials testing machine actuated by a linear motor, employing feedback signals for actuator control. In FIG. 2, r(t) represents the reference or demand signal for the test, which may be a position, force or strain value to be applied to the specimen. The Controller block includes all controller gains and calculations, and time delays. v(t) and i(t) are voltage and current respectively generated in the motor by the Drive (power amplifier). The motor generates a force F(t) proportional to i(t), which is applied to Ms. Ms is mass or rotary inertia of the moving components comprising the actuator, load cell and a first specimen-holding grip, Ks represents the 'load string stiffness', that is the resisting stiffness experienced by the actuator due to the combination of specimen, fixture and frame stiffnesses, and Cs represents damping that may be present in the load string. Ms moves in response to the sum of the motor force and resistive forces in the specimen due to Ks and Cs. If the load string stiffness Ks changes, the dynamics of the whole system change and in general the control gains need to be re-calculated quickly and repeatedly to provide effective control. The controller is provided with adaptive control (continuous auto-tuning) software that can provide this, despite rapid changes in specimen parameters including stiffness during a test. The method implemented by the auto-tuning software is described in more detail below.

A direct drive linear motor actuator also differs from servo-hydraulic systems in including a specialized power amplifier, which is used because the inductive load and current required are both much larger than for a servo valve. The power amplifier may have a tunable current feedback loop and also a suitable three-phase output. The overall system is simpler to model and more linear than hydraulic systems. The main conceptual difference is that the motor produces a force as its output. The mechanical system is a mass-spring-damper consisting of the motor 'slider' attached to the specimen under test. Due to the mass of the magnets mounted on the motor slider and the cylindrical area on which to mount them, the mass is generally larger than for an equivalent force hydraulic cylinder piston.

Motion of the motor slider within an electric motor generates a 'back-emf' that resists the movement. The back-emf is proportional to the velocity, so this is a velocity feedback or damping effect on the motor. This results in the motor having a maximum speed with no load, which is part of the motor specification. However, although this damping effect is present, it is relatively weak in comparison to many specimen stiffness values. This can make the mechanical system dynamics very underdamped (oscillatory) in comparison to a servohydraulic system and the inventor of the present invention has determined that it is desirable to introduce additional velocity feedback to the controller (as described in more detail below).

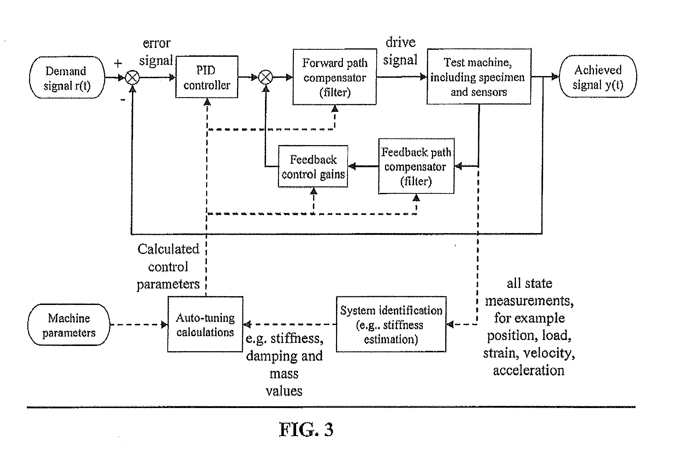

A three-phase motor also requires feedback of position to calculate the correct phases of the currents applied to the three phase motor coils (commutation). However, this process is not shown in FIG. 3 as it does not affect the dynamics of the system.

In a system in which the actuator is driven by a linear (or rotary) electric motor, the combination of drive (power amplifier) and motor can be assumed to generate a force (or torque, respectively) F(t) proportional to the drive signal u (t) with 'motor constant' $C_m$ so that:

$$F = C_m u \qquad (1)$$

F represents the reaction of the specimen together with the inertial load so:

$$K_s X + M_s \frac{d^2 X}{dt^2} = C_m u \qquad (2)$$

where X is the piston displacement. The effects of damping Cs are small and neglected initially here for simplicity. u is 'non-dimensional', and the other variables can also be 'non-dimensionalised' by appropriate scaling by the physical constants Ks, Ms and Cm to generate a simpler equivalent equation:

$$x + \frac{d^2 x}{d\hat{t}^2} = u \qquad (3a)$$

where

$$x = \frac{K_s X}{C_m} \qquad (3b)$$

$$\hat{t} = t\sqrt{\frac{K_s}{M_s}} = t\Omega \qquad\qquad (3c)$$

where $\Omega$ is the (dimensioned) natural frequency in radians/s.

In equation (3a), lower case letters indicate non-dimensional variables. The gain values Kp, Ki and Kv will also be non-dimensionalized analogously and shown with lower-case letters in the remaining equations. Non-dimensionalizing the equations is a key part of the method in this embodiment. It offers two main advantages:

1. The number of parameters and mathematical operations in the non-dimensional equation is much reduced from the original equation (compare equations (2) and (3a))

2. The solution to the non-dimensional equation is valid for different combinations of the underlying physical parameters. To a first approximation, changes in load and strain are proportional to displacement (change in position) in a material specimen. This means that the ideal non-dimensional controller gains can be calculated independently of the control mode. They can then be scaled ('dimensioned') again appropriately for each control mode as necessary. This means there is relatively little additional processor effort needed to calculate gains for all available control modes, so the gains are ready whenever the user changes control mode.

Using Laplace notation where 's' is the Laplace operator, the transfer function g(s)=x(s)/u(s) can be derived from equation (3a) :

$$g(s) = \frac{1}{s^2 + 1} \qquad\qquad (4)$$

This transfer function is second order, is marginally stable and gives a continuously oscillating response. If we add proportional gain to try to improve the response, we obtain:

$$h(s) = \frac{k_p G(s)}{1 + k_p G(s)} = \left(\frac{k_p}{k_p + 1}\right)\frac{1}{1 + \dfrac{s^2}{(1 + k_p)}} \qquad\qquad (5)$$

This is again a second order system with natural frequency $\sqrt{1 + k_p}$ and steady-state proportional error $\dfrac{1}{1 + k_p}$ . Unfortunately, h(s) is still only marginally stable, so proportional gain alone is not sufficient to achieve a stable closed-loop. This is the reason why control of a linear motor actuator can be more difficult to set up than for a servohydraulic system.

The essential problem is that the second-order response of the linear motor system needs at least two controller terms to define the speed of response and damping of the system. The standard approach in PID control would be to add derivative gain, kd, to give the following closed-loop:

$$h(s) = \frac{k_p + k_d s}{(s^2 + 1) + (k_p + k_d s)} = \frac{k_p + k_d s}{s^2 + k_d s + (1 + k_p)} \qquad\qquad (6)$$

This adds a damping term due to kd to the denominator, at the expense of adding a lead term due to kd in the numerator. Adding direct differentiation of the error signal like this has the following side effects:

● the system gain is large at high frequencies, amplifying signal noise or higher order resonances (which may cause instability)
● differentiation of the command waveform, so changes in slope become step changes in demand to the actuator, and steps become impulses; this can easily lead to saturation of the actuator demand signal or excitation of mechanical resonances in the system.

To avoid certain complexities in the controller and to avoid having to differentiate the command signal, the present embodiment differentiates only the feedback signal. Since the feedback signal under consideration is position, this is equivalent to velocity feedback. A combination of proportional gain in the forward path and velocity feedback gives the following system transfer function, where $k_v$ is the velocity feedback gain:

$$h(s) = \frac{k_p}{\left(s^2 + 1\right) + \left(k_p + k_v s\right)} = \left(\frac{k_p}{1 + k_p}\right) \frac{1}{1 + \dfrac{k_v s}{\left(1 + k_p\right)} + \dfrac{s^2}{\left(1 + k_p\right)}} \qquad (7)$$

Comparison to the standard form for a second-order system,

$$G(s) = \frac{1}{1 + 2\zeta\left(\dfrac{s}{\omega_n}\right) + \left(\dfrac{s}{\omega_n}\right)^2} \qquad (8)$$

shows:

Natural frequency (non-dimensional):  $\qquad \omega_n = \sqrt{1 + k_p} \qquad (9)$

Damping coefficient:  $\qquad \zeta = \dfrac{k_v}{2\sqrt{1 + k_p}} \qquad (10)$

Steady-state error:  $\qquad e_0 = \dfrac{1}{1 + k_p} \qquad (11)$

This arrangement has the attractive features that:

● The speed of response and damping characteristics correspond intuitively to values of kp and $k_v$ respectively.

● Differentiation of the command signal has been avoided.

● If a velocity sensor is available, differentiation is not required at all.

A close practical approximation to a velocity sensor is an incremental encoder, if it is sampled quickly enough.
Thus, the linear motor actuator controller according to this embodiment tunes a proportional forward path control gain and a velocity feedback gain. The damping factor depends on the values of both gains as well as the specimen stiffness. The steady-state error is counteracted by the addition of integral gain, and so the solution involves tuning at least three gains.
The mathematical analysis described holds for rotary direct drive motors as well as linear direct drive motors, and also for geared electric motor arrangements. A gear ratio R>1 increases the motor force or torque by a factor R, but also increases the apparent inertia and back-emf damping of the motor by the same factor R. The maximum speed falls by the factor R. The natural frequency of the mechanical resonance due to inertia and specimen stiffness falls by a factor of the square-root of R, which makes it easier for to the controller to achieve stable velocity feedback. For most geared motor arrrangements, R is large, and a fixed velocity feedback gain is sufficient. However, 'low-geared' motors would benefit from the tunable velocity feedback gain used in the current embodiment with a direct drive motor.

In the auto-tuning calculations described below, use is made of some mathematical approximations for the standard second-order system in equation (8), which are derived by substituting frequency 'jω' for the Laplace operator 's':

The magnitude of the gain below the resonance (ω<ωn):

$$\lfloor G(j\omega)\rfloor \approx 1 \qquad\qquad (12)$$

The magnitude of the gain above the resonance (ω)>ωn):

$$\lfloor G(j\omega)\rfloor \approx \frac{1}{\left(\dfrac{\omega}{\omega_n}\right)^2} \qquad\qquad (13)$$

The magnitude of the gain at the resonance (ω=ωn):

$$\lfloor G(j\omega)\rfloor \approx \frac{1}{2\zeta} \qquad\qquad (14)$$

The phase of g(jω) around the resonance (ω≈ωn):

$$\Phi\big(G(j\omega)\big) \approx -\left(\frac{\pi}{2}\right) - \frac{\left(\dfrac{\omega}{\omega_n}\right)-1}{\zeta} \qquad\qquad (15)$$

Equations (14) and (15) require knowledge of the natural frequency ωn and damping factor ζ. If kp is assumed to be zero or small (in non-dimensional form), then (1+kp)≈1 and equation (9) for the natural frequency can be simplified to:

$$\omega_n \approx 1 \qquad\qquad (16)$$

While it was assumed earlier that damping was negligible, an estimate of damping is required to be able to use these equations. This estimate is made from a combination of the motor back-emf modelled by the constant Cb and an estimate of load string damping per unit of load string stiffness Cmin_K (see TABLE. 1) such that:

$$\zeta_0 \approx \frac{C_b C_m + C_{\min\_k} K_s}{2\sqrt{K_s M_s}} \qquad\qquad (17)$$

If the effect of velocity feedback is included according to equation (10) and kp is assumed small, the damping factor for the system including velocity feedback is:

$$\zeta_{kv} \approx \zeta_0 + \frac{k_v}{2} \qquad\qquad (18)$$

The known time delay for the action of the controller and the assumption in (16) can be taken account of by modifying equation (15) to:

$$\Phi\big(g(j\omega)\big) \approx -\left(\frac{\pi}{2}\right) - \frac{\omega - 1}{\zeta} - \omega t_{delay} \qquad (19)$$

To achieve a specified phase margin 'PM' for control stability, it is required that:

$$\left(\frac{\pi}{2}\right) - \frac{\omega - 1}{\zeta} - \omega t_{delay} \geq PM \qquad (20)$$

when the overall system gain including the controller gain is unity. If the phase margin cannot be achieved, we can alternatively achieve stability with a specified gain margin, 'GM', if the system gain is always less than the unity by a factor GM. Since the system gain is highest at the resonance, this can be described by modifying equation (14). This method is used to set the integral gain:

$$\frac{k_i}{2\zeta} \leq \frac{1}{GM} \qquad (21)$$

The aim in the auto-tuning calculations described in this embodiment is to make each gain (kv, kp and ki) as large as possible while fulfilling specified phase and gain margins. In addition to these general rules for setting gains, some additional calculations are used to address specific physical characteristics of the system that are not modelled in this general method:

● The integral gain is not allowed to be lower than a minimum value determined by a response time parameter TkiMin. This is to overcome actuator friction with very compliant specimens where control gains and forces are very low.

● In load control, the proportional gain is not allowed to be larger than a maximum value based on the expected 'end mass' Mcell between load cell and specimen. This is to take account of the 'inertial error' in load cell reading due to this mass.

● In strain control, controller gains kp and ki are scaled by the gain amplification factor Kx/Ks, where Kx is the specimen stiffness and is always larger than the overall load string stiffness Ks. However, the increase is limited to a factor 'maxStrainGainAmp' to avoid very high control gains if a system is not set up correctly.

● The corrective effects of the integral gain and velocity feedback gain are 180degrees out of phase and so they cancel each other to some extent. A higher velocity feedback gain is therefore used to counteract this effect at the resonance if the system resonance is well controlled (in other words, if the velocity feedback achieves the specified phase margin PM_vel).

It has been assumed so far that the linear motor actuator is also a completely linear system, and this is a key advantage compared to a servohydraulic system. This includes very low levels of bearing friction, since there are no oil seals. This is true to a large extent, but there are still some effects that can modify the motor gain $C_m$, for example a reductions in $C_m$ close to the ends of the stroke because of a reduced magnetic field strength, or reductions at high temperatures because the resistance of the motor coils increases.

Although the actuator is very linear, the initial response is likely to be slower than for a hydraulic actuator, due to the higher mass of the motor slider compared to a hydraulic piston and the high inductive load of the motor. This higher slider mass and low friction make the resonance of the slider on the specimen stiffness very lightly damped with a relatively low natural frequency, and controlling this resonance is a key challenge for the control system. Velocity feedback is only effective at adding damping within a limited bandwidth due to the overall loop delay. As shown in equation (7), the value of velocity gain limits the value of proportional gain for a given damping factor, so useable proportional gain also decreases with increasing specimen stiffness. As a result of the relatively low proportional gain, it may be necessary to use much higher levels of integral gain than would be used for a servohydraulic system, in order to reduce the steady-state error quickly. This need to set three gains together based on the load dynamics but within stability limits makes manual tuning of a linear motor system much more challenging than for a servohydraulic system.

A materials test machine according to one embodiment of the invention utilises three-phase brushless linear motor technology and has been designed to exploit the advantages of linear motor actuation technology, with the following design features:

● The machines require only a single-phase electricity supply, so a three-phase installation is not necessary.

● The motors use air-cooling, avoiding the design complexity and maintenance requirements of a water cooling system.

● Advanced non-magnetic ball bearings are employed to minimize friction and wear while avoiding signal distortion.

● An optical encoder is used to provide noise-free displacement measurements in addition to an LVDT for measuring absolute position.

● A mechanical brake mechanism is used to hold the actuator in position when the actuator power is switched off.

These features are described in published documents of Instron Limited.

A key advance over previous systems is the use of a novel automatically tuned controller to automate what would otherwise be a complex manual tuning operation of a plurality of gain values. In the preferred embodiment, at least three gain values are repeatedly recalculated. The automatic tuning of the controller takes account of changing specimen stiffness values and known system parameters to calculate forward path Kp and Ki gains as well as a velocity feedback gain $K_v$. The calculations are repeated continuously throughout the test.

This enables the best balance of gains to be chosen at each point in time and simplifies the tuning process from the user's point of view. The main parameter used to select initial gain values is the specimen stiffness, and this can be either estimated automatically (by applying a force gradually to the specimen and reading the displacement) or entered by the user, so that it can be used with any specimen. The controller then sets the correct balance between the gain values and an initial overall loop gain. In some cases, these settings are sufficient for the test, but this is not the case for specimens that have significant, non-linear stiffness changes during a test. High performance automatic and adaptive tuning is needed for structure testing machines that include direct drive electric motor actuators, due to their potentially unstable dynamic behaviour in response to changing specimen stiffness during testing. State feedback (including velocity feedback) is used to provide effective damping.

FIG. 3 provides a schematic representation of the adaptive controller for an electric actuator-driven materials test machine.

To optimize the automated calculation of controller gain values for speed, the controller according to the present implementation performs certain calculations in advance of a test, to the extent that this is possible because the results do not depend on the estimated changing parameter values. The controller also performs a continuous recalculation of controller gain values as a sequence of separate steps, each of which can be performed in a predefined number of processor clock cycles. This results in the complete calculation taking a number of processor cycles to complete, but keeps the original accuracy and achieves deterministic processing completion time (and a reduced risk of operations failing to complete in an acceptable time than alternative approaches). Deterministic completion - e.g. knowledge that an update will be completed every 14 ms, makes performance more predictable.

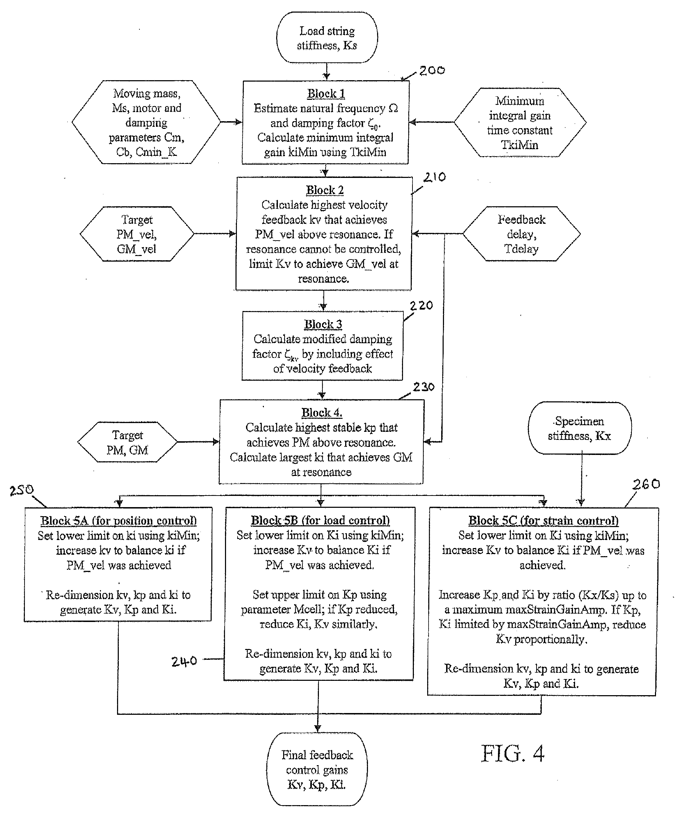

FIG. 4 shows a flow diagram outlining the conceptual groups of calculations in separate blocks together with the parameter values that are used in each step. For the purposes of efficient processor calculation, each of these blocks have been further divided into smaller steps. In order to minimize the risk of running out of processing time, the steps into which the controller gain calculation has been divided each involve no more than a known small number of divide, square-root or trigonometric functions. However, a single step may include several summing or multiplying operations, keeping the order of magnitude of processing time similar between steps.

The initial pre-calculation phase includes the following eight steps, one step per 1ms until they are all complete (after 8ms):

1. Calculate the square-root of the moving mass, $\sqrt{M_s}$ .

2. Calculate the inverse of the square-root of the moving mass calculated in step 1, $\sqrt{M_s}$

3. Calculate the minimum bound on the integral gain kiMin by scaling the integral response time parameter TkiMin by system physical parameters.

4. Calculate kpMax, the maximum allowable value for the proportional gain applicable to load control by scaling the parameter Mcell (that indicates how much 'end mass' there is on the load cell) by system physical parameters.

5. Calculate the inverse of the motor gain $\left( \dfrac{1}{C_m} \right)$ scaled by an internal 'fullscale' value appropriate to load control.

6. Calculate the inverse of the motor gain $\left( \dfrac{1}{C_m} \right)$ scaled by an internal 'fullscale' value appropriate to position control.

7. Calculate the inverse of the motor gain $\left( \dfrac{1}{C_m} \right)$ scaled by an internal 'fullscale' value appropriate to velocity feedback.

8. Calculate the inverse of the motor gain $\left( \dfrac{1}{C_m} \right)$ scaled by an internal 'fullscale' value appropriate to strain control.

Once the pre-calculation phase is complete, the following set of steps runs as a continous cycle as long as adaptive control is being used. In the current implementation there are 14 steps, so the complete update cycle takes 14ms. These steps are shown in Figure 4 and are described in more detail below.

1. Calculate (200) the square-root of the current estimated 'load string stiffness', $\sqrt{Ks}$. This is repeatedly used in calculations in the remaining steps.

2. Calculate (200) the inverse of the load string stiffness, $\dfrac{1}{\sqrt{Ks}}$; calculate the system natural frequency $\Omega = \sqrt{\dfrac{Ks}{Ms}}$ and its inverse. Estimate plant damping factor ζ0 using equation (17); calculate non-dimensional time delay, $t_{delay} = \Omega \times T_{delay}$.

3. Calculate (210) the maximum frequency at which the target phase margin PM_vel can be achieved for velocity feedback alone using equation (20).

4. If this frequency is above the natural frequency (ω>1), use equation (13) to calculate (210) the velocity feedback gain kv such that the overall system gain is unity a this frequency. Alternatively, if the frequency is below the resonance (ω≤1), use equation (21) with kv instead of ki to calculate the maximum value of kv that achieves the gain margin GM_vel. Estimate (220) the system damping including velocity feedback using equation (18).

5. For a load control mode, calculate (230) the load control gains: using the damping factor including velocity feedback (ζkv), calculate the maximum frequency at which the target phase margin PM can be achieved for the proportional gain alone using equation (20).. If this frequency is above the natural frequency (ω>1), use equation (13) to calculate the proportional gain kp such that the overall system gain is unity a this frequency. Alternatively, if PM cannot be achieved, set kp=0. Use equation (21) to calculate the maximum value of ki that achieves the gain margin GM, using the damping factor including velocity feedback (ζkv).

6. Apply (240) the upper limit kpMax to kp for load control; if kp is reduced to achieve this, reduce ki and kv for load control as well in proportion. Apply the minimum limit kiMin to ki for load control.

7. Increase (240) the velocity gain for load control to counteract the cancelling effect of ki at the resonance, if kv achieved the phase margin PM_vel when set.

8. Scale (240) the load control Kp, Ki and Kv gains correctly for use on the current system using physical parameters Ms, Ks, Cm and internal fullscale values..

9. For position and strain control modes, calculate (230) non-dimensional proportional and integral gains for position and strain control using the same method as step 5 above.

10. For position control mode, apply (250) the minimum limit kiMin to ki. Increase (250) the velocity gain for position control to counteract the cancelling effect of ki at the resonance, if kv achieved the phase margin PM_vel when set.

11. Scale (250) the position control Kp, Ki and Kv gains correctly for use on the current system using physical parameters Ms, Ks, Cm and internal fullscale values.

12. for strain control mode, calculate (260) the 'gain amplification factor', which is the ratio of specimen to load string stiffness, Kx/Ks. Limit (260) this factor to a maximum value maxStrainGainAmp.

13. Multiply (260) ki and kp by the gain amplification factor determined in step 12. If the gain amplification factor for strain control was reduced to comply with the limit maxStrainGainAmp, reduce (260) kv in proportion.

14. Scale (260) the strain control gains Kp, Ki and Kv correctly for use on the current system using physical parameters Ms, Ks, Cm and internal fullscale values.

Note that the calculation of non-dimensional proportional and integral gains is done twice, once for load control and once for position and strain control. This has been done to allow different values of PM and GM to be used for load control to take account of slightly different dynamics in load control compared to position and strain control. However, the calculation could be done just once for all three control modes with little difference in control performance if necessary.

The invention has been embodied in a version of the Instron ElectroPuls electric motor-based test machine, where a stiffness estimation routine has been added to provide estimates of stiffness, and a known tuning method has been replaced by recalculation method that runs regularly throughout the test. The sample times for calculation updates were 1ms for stiffness estimation and 14ms for the tuning calculation, because it was split into 14 steps that were run every 1ms. These update times were constrained by the processing time available on the controller, and could be made significantly faster with a more powerful processor.

The stiffness estimation method is a recursive filter that needs some initial values to assume when it starts to be run. Its initial performance can be improved by providing it with initial stiffness values found from an initial stiffness-estimation procedure applied to the specimen before the test begins. The procedure involves applying a small load (force) to the specimen and measuring the changes in the resulting measured load, displacement and strain signals.

Initial results show that the method works successfully. Two particular cases are highlighted here.

**Case 1: Improved tracking of cyclic displacement commands on a test specimen with nonlinear stiffness**

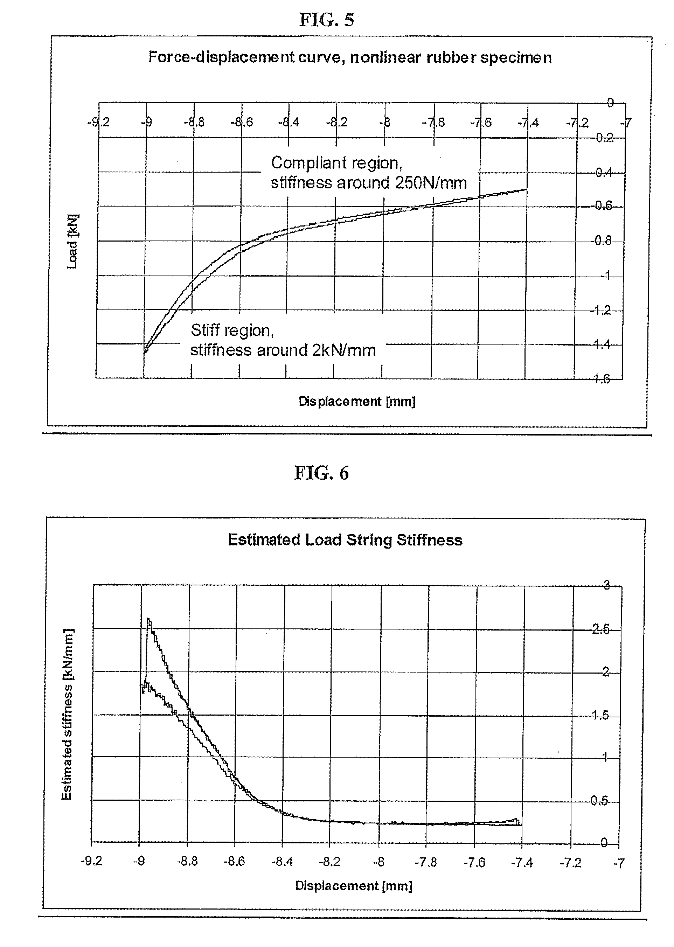

A rubber specimen with a nonlinear stiffness characteristic was tested. It was loaded in compression, so forces and displacements are negative by convention. The specimen was constructed so that its stiffness changes from 'compliant' (around 250N/mm stiffness) to a 'stiff' (around 2kN/mm stiffness) at a load of around -0.8kN. FIG. 5 shows the force-displacement characteristic of the nonlinear rubber test specimen when tested around the region of transition between the compliant and stiff regimes.

The aim of the test was to achieve a sinusoidal displacement command with frequency 1Hz and amplitude 0.76mm (the displacement amplitude was chosen to suit the load range of interest).

When the test was running, the stiffness was estimated continuously by the controller. The on-line stiffness estimation results with respect to displacement are shown for the non-linear rubber specimen in FIG. 6, and agree with the stiffness estimates made from FIG. 5. The values can be seen to rise from a stiffness of around 250N/mm for small displacements to around 2.5kN/mm at the highest displacements used. The jump in the estimate at the highest displacement occurs due to the difficulty of measuring stiffness accurately around the 'turning point' of the waveform, where incremental steps become very small.

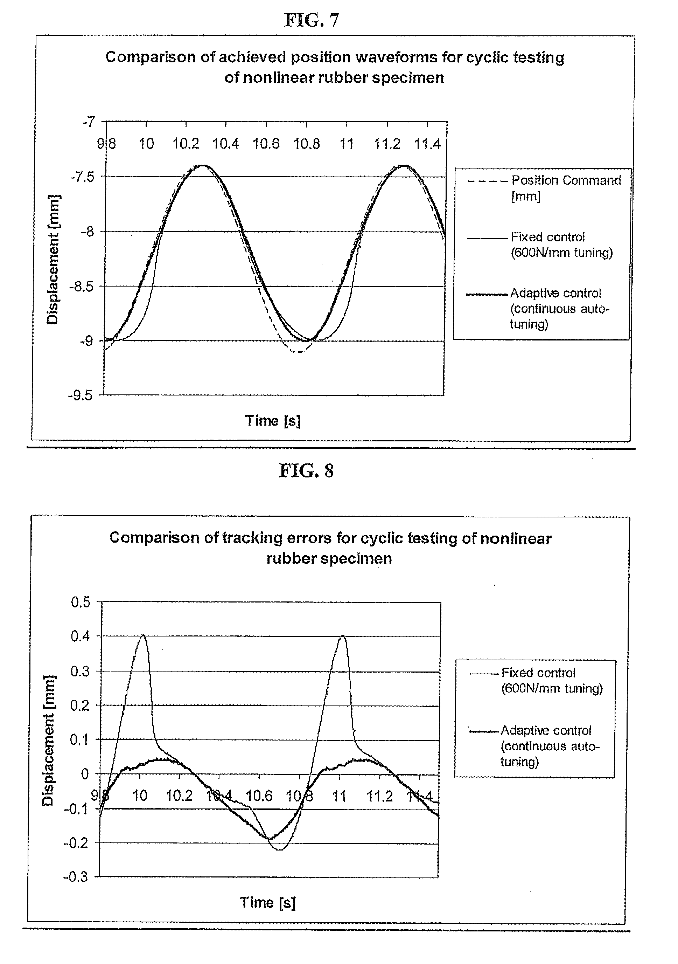

Results were compared between a test that was run with fixed feedback gains, having been tuned to a 'compromise' stiffness value of 600N/mm, and a test where the adaptive stiffness-based tuning was enabled. FIG. 7 shows the resulting waveforms for cyclic testing of the non-linear rubber specimen and in particular shows that the achieved curve using adaptive tuning has a reduced time lag compared with fixed tuning. FIG. 8 shows the tracking errors for the same cyclic testing, in other words the difference between command and achieved waveforms. It can be seen that enabling the adaptive tuning improves the waveform shape and reduces the worst-case tracking error significantly.

**Case 2: Improved extension rate control during a load-extension test with constant extension rate demand**

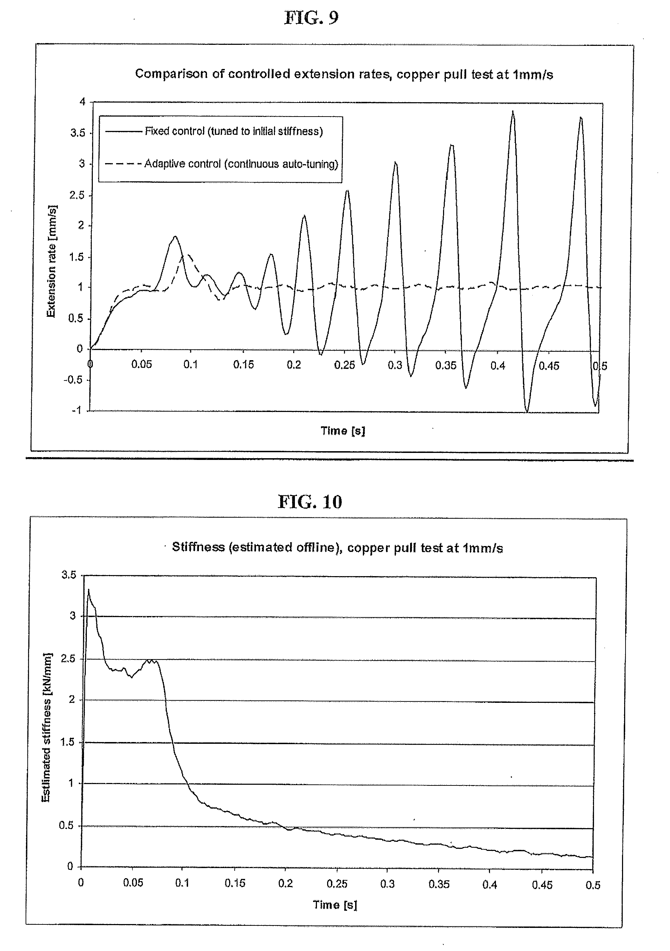

The aim of this test was to stretch a copper wire sample at a constant extension rate of 1mm/s. Such tests are often used to measure the strength and yield behaviour of a material. It is difficult to control the extension rate well with a direct-drive electric actuator, however, because the stiffness of the specimen decreases dramatically during the test as the material yields. This test was performed in position control, but would have similar results if performed in strain control. FIG. 9 shows a comparison of the achieved extension rates during the beginning of the copper wire pull tests, between a fixed controller tuned to the initial specimen stiffness, and one with adaptive tuning. Both controllers perform similarly during the first part of the test, where the stiffness is constant. However, when the material yields and the stiffness decreases, the fixed controller becomes unstable while the adaptive controller reaches the desired steady extension rate. The estimated stiffness during the same time period is shown in FIG. 10, which shows when the initial stiffness decreased.

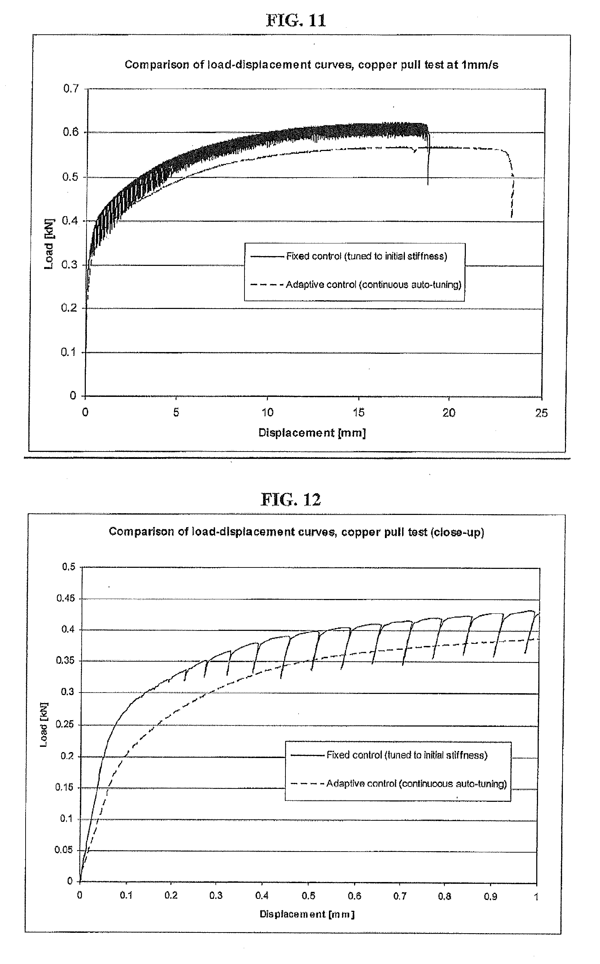

The unwanted oscillation with the fixed-gain controller also affects the results that are required from such a test, namely the measured load-extension curve. FIG. 11 shows the measured load-displacement curves for comparison of the load-extension between the fixed-gain and adaptive controllers over the complete duration of the test. The oscillations during the test with the fixed-gain controller make the resulting curve indistinct, and may also damage the specimen, leading to misleading results. In comparison, the adaptive controller maintains a clean load-extension curve th roughout the test. FIG. 12 shows the initial part of the same test shown in FIG. 11. The characteristic form of the disturbance on the load-extension plot with fixed controller gains is shown.

The embodiments described above thus provide a materials test machine that uses control gains and compensators in both the forward and feedback control paths with multiple measured feedback signals, whose parameter values are regularly updated by an automatic tuning procedure. The tuning procedure contains predefined calculations that use known system parameter values together with parameters specific to the test that are regularly calculated during the test.

In one embodiment, the materials test machine uses Kp and Ki control gains, together with lead-lag and 'notch filter' compensators, in the forward path. These gains and compensation are applied to an error signal (a demand signal minus achieved values) in position, load or strain modes. A further control gain and compensator in the feedback path is applied to feedback signals including velocity (or velocity estimated from position) and acceleration. All the control gains and parameters are regularly calculated by the automated tuning procedure, where the tuning procedure contains predefined calculations that use known system parameter values together with parameters specific to the test that are regularly estimated during the test, including specimen stiffness, damping coefficient and system moving mass.

While the description above includes details of a number of embodiments of the invention, it will be appreciated by persons skilled in the art that various modifications and enhancements may be made within the scope of the present invention as described and claimed. For example, different combinations of system parameters may be utilised; or use of processor time may be optimized further by replacing function calls with repeated in-line code, using certain simpler numerical approximations to the ideal mathematical functions for faster calculations (but with reduced accuracy) or improving further the distribution of mathematically complex operations between steps. Some embodiments will calculate the gains on all channels simultaneously, as mentioned above, whereas others will calculate only the current control channel for calculation speed. Furthermore, if the same control targets PM and GM were used for all channels, most of the calculations would be identical for all channels and processing time could be saved. With various enhancements such as disclosed herein, the example embodiment's 14ms update time could be reduced to 5ms or less even using the same processors, and more powerful processors would further reduce processing time and enable shorter update times.

For example, although the embodiment described in detail above involves performing one step every 1ms for deterministic completion of a processing cycle every 14ms, another embodiment involves defining a new task that occurs every 10ms (for example) rather than every 1ms, and putting all the calculations into a contiguous block in this task. This 10ms task runs at a lower priory than other tasks that might occur more frequently and would be interrupted by them. The potential advantage is that the calculations are spread over the available processor time, and it may be possible to run the complete update faster than the deterministic approach. However, this alternative approach requires consideration of whether there is time available in total to complete the update cycle when higher priority tasks occur.

Yet another embodiment involves defining a background task that is not deterministic in time, but just repeats itself as fast as possible while being interrupted by other tasks. This offers potentially the quickest update time in general, but there may be other tasks that occasionally combine to interrupt it so much that there is a noticeable but unpredictable delay or 'jitter'. Consequences of over-running on processing time depend on the control computer's operating system and/or low-level task management. On the system used in the tests described above, a single over-run is reported but the system continues, but two or more over-runs close together would cause the controller to shut down ('crash'). A tool has been provided to monitor how much of the real-time processor resource is used to complete each 1ms task so that potential failures can be minimized.

A method for controlling an electromagnetically-driven actuator according to the present invention is defined in appended claim 1, a controller for an electromagnetically-driven actuator according to the present invention is defined in appended claim 11 and an apparatus including an electromagnetically-driven actuator and an actuator controller for the electromagnetically-driven actuator according to the present invention is defined in appended claim 12. Further preferred features thereof are claimed in subclaims 2 to 10 and 13 to 15. In addition to the claimed embodiment in the appended claims, the following is a list of additional embodiments, which may serve as the basis for additional claims in this application or subsequent divisional applications:

Embodiment 1

An apparatus, comprising: an electromagnetically-driven actuator comprising a direct drive electric motor arranged to apply loads to a structure; and an actuator controller for providing control signals to the actuator, and configured to repeatedly calculate actuator control gains during operation of the actuator, in response to monitored changes in one or more parameters of the structure which changes result from the forces applied to the structure.

Embodiment 2

An apparatus according to Embodiment 1, wherein the apparatus is a structure testing apparatus and the actuator is arranged to apply loads to a test specimen structure during a test; and wherein the controller includes means for repeated automatic tuning of control gains in response to monitored changes in one or more parameters of the test specimen structure during a test of the test specimen structure.

Embodiment 3

A structure testing apparatus according to Embodiment 2, comprising: a test specimen holder; a load detector for monitoring the load applied to a test specimen; and monitoring apparatus for monitoring one or more parameters of the test specimen as load is applied; wherein the electromagnetic actuator is arranged to apply loads to a test specimen held by the holder; and wherein the controller is adapted to repeatedly perform, during the test, an automated calculation of forward control path and feedback control path gains for the controller based on the monitored load and monitored one or more parameters, and the controller is adapted to apply the calculated gains to continuously tune operation of the actuator during the test.

Embodiment 4

An apparatus according to any one of Embodiments 1 to 3, wherein the actuator is a direct drive linear electric motor.

Embodiment 5

An apparatus according to any one of Embodiments 1 to 3, wherein the actuator is a direct drive rotary electric motor.

Embodiment 6

A method for controlling an electromagnetically-driven actuator, comprising a direct drive electric motor arranged to apply forces to a structure, the method comprising: providing control signals to the actuator and performing an operation using the actuator, to apply forces to a structure, while monitoring changes in one or more parameters of the structure which changes result from the forces applied to the structure; and repeatedly calculating actuator control gains during performance of the operation, in response to the monitored changes in one or more parameters.

Embodiment 7

A method according to Embodiment 6, implemented in a structure testing machine for testing a test specimen structure, wherein the actuator is arranged to apply loads to the test specimen structure during a test, the method comprising: performing a test by controlling the electromagnetic actuator to apply loads to the test specimen structure, while monitoring both the applied loads and changes in one or more parameters of the test specimen structure; and repeatedly calculating control gains for the controller, during the test, in response to the monitored parameters.

Embodiment 8

A method according to Embodiment 6 or Embodiment 7, comprising the steps of: setting initial control gains for a controller of the electromagnetic actuator; performing a test by controlling the electromagnetic actuator to apply loads to the test structure, while monitoring both the applied loads and changes in one or more parameters, including stiffness, of the test structure; and during the test, repeatedly performing an automated calculation of forward control path and feedback control path gains for the controller of the electromagnetic actuator based on the monitored one or more parameters, thereby to correct the applied load towards a desired load.

Embodiment 9

The method of any one of Embodiments 6 to 8, wherein the automated repeated calculation of the control gains comprises periodically performing a predefined sequence of calculation steps, each of which steps is performed within one or more predefined processor clock cycles of a predefined plurality of processor clock cycles, and repeating the sequence of steps after the predefined plurality of processor clock cycles.

Embodiment 10

The method of Embodiment 8, wherein the step of setting initial control gains comprises applying predefined default control gains that are known to be stable for all specimen stiffness values.

Embodiment 11

The method of Embodiment 8, wherein the step of setting initial control gains comprises estimating the stiffness of the load string, and determining initial control gains based on the estimated stiffness.

Embodiment 12

The method of any of Embodiments 6 to 11, wherein the control gains comprise a velocity feedback control gain.

Embodiment 13

The method of any of Embodiments 6 to 12, wherein the control gains comprise proportional ($K_p$) and integral ($K_i$) forward control gains.

Embodiment 14

The method of Embodiment 13, further comprising applying lead-lag and notch filter compensators in the forward control path.

Embodiment 15

The method of any of Embodiments 6 to 14, comprising simultaneously calculating forward and feedback control path gains for a plurality of control modes selected from the group comprising: a displacement control mode, a load control mode and a strain control mode.

Embodiment 16

The method of Embodiment 15, comprising calculating control gains according to a method that includes applying a parameter-based scaling to make the calculations independent of one or more system parameters, such that the calculated control gains are valid for a plurality of said control modes.

Embodiment 17

A structure testing apparatus, comprising: an electromagnetically driven actuator arranged to apply loads to a test structure; an actuator controller for providing control signals to the actuator, wherein the controller includes means for repeated automatic tuning of a plurality of control gains, including at least one gain that acts in the feedback path only, during a test.

Embodiment 18

A structure testing apparatus according to Embodiment 17, further comprising: a test specimen holder; a load detector for monitoring the load applied to a test specimen; and monitoring apparatus for monitoring one or more parameters of the test specimen as load is applied; wherein the electromagnetic actuator is arranged to apply loads to a test specimen held by the holder; and wherein the controller is adapted to repeatedly perform, during the test, an automated calculation of forward control path and feedback control path gains for the controller based on the monitored load and monitored one or more parameters, and the controller is adapted to apply the calculated gains to continuously tune operation of the actuator during the test.

Embodiment 19

A structure testing apparatus according to Embodiment 17 or Embodiment 18, wherein the actuator is a direct drive linear electric motor.

Embodiment 20

A structure testing apparatus according to Embodiment 17 or Embodiment 18, wherein the actuator is a direct drive rotary electric motor.

Embodiment 21

A controller for controlling an electromagnetic actuator within a structure testing machine, wherein the structure testing machine includes: an electromagnetic actuator for applying load to a test specimen; a load detector for monitoring the load applied to the test specimen; and monitoring apparatus for monitoring changes in one or more parameters, including stiffness, of the test specimen during a test; wherein the controller comprises: means for controlling the actuator to apply load to a test specimen within the structure testing machine; means for repeatedly performing, during the test, an automated calculation of a plurality of control gains, including at least one gain that acts in the feedback path, for the controller based on the monitored one or more parameters; and means for applying the calculated gains within the controller to repeatedly tune operation of the actuator during the test.

Embodiment 22

A computer program for generating control signals for controlling a direct drive electromagnetic actuator within a testing machine, wherein the testing machine includes: an electromagnetic actuator for applying load to a test specimen; a load detector for monitoring the load applied to the test specimen; and means for monitoring changes in one or more parameters, including stiffness, of the test specimen during a test; wherein the computer program comprises: program code for execution by a processor within the structure testing machine to control operation of the actuator during a test; and program code for execution by the processor to repeatedly perform, during the test, an automated calculation of a plurality of control gains for controlling the actuator, including at least one gain that acts in the feedback path, based on the monitored one or more parameters of the test specimen, to generate an automatically tuned control signal for adaptive control of the actuator in response to the monitored one or more parameters.

Embodiment 23

A method for controlling an electromagnetic actuator within a structure testing machine, which actuator is arranged to apply loads to a test structure during a test, the method comprising:

performing a test by controlling the electromagnetic actuator to apply loads to the test specimen, while monitoring both the applied loads and changes in one or more parameters of the test structure; and repeatedly calculating, during the test, control gains for a controller of the actuator in response to the monitored parameters, including repeatedly calculating at least one gain that acts in the feedback path.

Embodiment 24

A method according to Embodiment 23, comprising the steps of: setting initial control gains for a controller of the electromagnetic actuator; performing a test by controlling the electromagnetic actuator to apply loads to the test structure, while monitoring both the applied loads and changes in one or more parameters, including stiffness, of the test structure; and during the test, repeatedly performing an automated calculation of forward control path and feedback control path gains for the controller of the electromagnetic actuator based on the monitored one or more parameters, thereby to correct the applied load towards a desired load.

Embodiment 25

The method of Embodiment 24, wherein the actuator is a direct-drive electric motor actuator.

Embodiment 26

The method of Embodiment 25, wherein the actuator is a direct-drive linear electric motor actuator.

Embodiment 27

The method of Embodiment 25, wherein the actuator is a direct-drive rotary electric motor actuator.

Embodiment 28

The method of any one of Embodiments 23 to 27, wherein the automated repeated calculation of the control gains comprises periodically performing a predefined sequence of calculation steps, each of which steps is performed within one or more predefined processor clock cycles of a predefined plurality of processor clock cycles, and repeating the sequence of steps after the predefined plurality of processor clock cycles.

Embodiment 29

The method of Embodiment 24, wherein the step of setting initial control gains comprises applying predefined default control gains that are known to be stable for all specimen stiffness values.

Embodiment 30

The method of Embodiment 24, wherein the step of setting initial control gains comprises estimating the stiffness of the load string, and determining initial control gains based on the estimated stiffness.

Embodiment 31

The method of any of Embodiments 23 to 30, wherein the control gains comprise a velocity feedback control gain.

Embodiment 32

The method of any of Embodiments 23 to 31, wherein the control gains comprise proportional (Kp) and integral (Ki) forward control gains.

Embodiment 33

The method of Embodiment 32, further comprising applying lead-lag and notch filter compensators in the forward control path.

Embodiment 34

The method of any of Embodiments 23 to 33, comprising simultaneously calculating forward and feedback control path gains for a plurality of control modes selected from the group comprising: a displacement control mode, a load control mode and a strain control mode.

Embodiment 35

The method of Embodiment 34, comprising calculating control gains according to a method that includes applying a parameter-based scaling to make the calculations independent of one or more system parameters, such that the calculated control gains are valid for a plurality of said control modes.

Embodiment 36

A method for controlling an electromagnetically-driven actuator, which actuator is arranged to apply forces to a structure, the method comprising: providing control signals to the actuator to control performance of an operation using the actuator to apply forces to a structure, while monitoring changes in one or more parameters of the structure which changes result from the forces applied to the structure; and repeatedly calculating actuator control gains during performance of the operation, in response to the monitored changes in one or more parameters; wherein the electromagnetic actuator is a low-geared indirectly-driven electric motor.

Embodiment 37

An apparatus, comprising: an electromagnetically-driven actuator arranged to apply loads to a structure; and an actuator controller for providing control signals to the actuator, and configured to repeatedly calculate actuator control gains during operation of the actuator, in response to monitored changes in one or more parameters of the structure which changes result from the forces applied to the structure; wherein the electromagnetically-driven actuator comprises a low-geared indirectly-driven electric motor.

**Claims**

1. A method for controlling an electromagnetically-driven actuator that is arranged to apply forces to a structure, the method comprising:

   providing control signals to the actuator and performing an operation using the actuator, to apply forces to a structure, while monitoring changes in one or more parameters of the structure that result from the forces applied to the structure; and
   repeatedly calculating actuator control gains during performance of the operation, in response to the monitored changes in one or more parameters;
   wherein the repeated calculation of actuator control gains is implemented as a set of processor tasks that are each predetermined to complete in a respective determinate number of processor clock cycles for determinate completion of the repeated calculation within a number, M, or processor clock cycles; wherein the calculation is repeated every P processor clock cycles, where P is a predefined number $P \geq M$.

2. A method according to claim 1, implemented in a structure testing machine for testing a test specimen structure, wherein the actuator is arranged to apply loads to the test specimen structure during a test, the method comprising:

   performing a test by controlling the electromagnetic actuator to apply loads to the test specimen structure, while monitoring both the applied loads and changes in one or more parameters of the test specimen structure; and
   repeatedly calculating control gains for the controller, during the test, in response to the monitored parameters.

3. A method according to claim 1 or claim 2, comprising the steps of:

   setting initial control gains for a controller of the electromagnetic actuator;
   performing a test by controlling the electromagnetic actuator to apply loads to the test structure, while monitoring both the applied loads and changes in one or more parameters, including stiffness, of the test structure; and
   during the test, repeatedly performing an automated calculation of forward control path and feedback control path gains for the controller of the electromagnetic actuator based on the monitored one or more parameters, thereby to correct the applied load towards a desired load.

4. The method of claim 3, wherein the step of setting initial control gains comprises applying predefined default control gains that are known to be stable for all specimen stiffness values.

5. The method of claim 3, wherein the step of setting initial control gains comprises estimating the stiffness of the load string, and determining initial control gains based on the estimated stiffness.

6. The method of any of claims 1 to 5, wherein the control gains comprise a velocity feedback control gain.

7. The method of any of claims 1 to 6, wherein the control gains comprise proportional (Kp) and integral (Ki) forward control gains.

8. The method of claim 7, further comprising applying lead-lag and notch filter compensators in the forward control path.

9. The method of any of claims 1 to 8, comprising simultaneously calculating forward and feedback control path gains for a plurality of control modes selected from the group comprising: a displacement control mode, a load control mode and a strain control mode.

10. The method of claim 9, comprising calculating control gains according to a method that includes applying a parameter-based scaling to make the calculations independent of one or more system parameters, such that the calculated control gains are valid for a plurality of said control modes.

11. A controller for an electromagnetically-driven actuator, which actuator is arranged in an apparatus for applying forces to a structure and is arranged for receiving signals representing monitored changes in one or more parameters of the structure, wherein the controller comprises program code which, when executed by a processor, performs an actuator control method comprising:

   providing control signals to the actuator and performing an operation using the actuator to apply forces to said structure;
   receiving signals representing monitored changes in one or more parameters of the structure that result from the forces applied to the structure; and
   repeatedly calculating actuator control gains during performance of the operation, in response to the monitored changes in one or more parameters;
   wherein the repeated calculation of actuator control gains is implemented as a set of processor tasks that are each predetermined to complete in a respective determinate number of processor clock cycles for determinate completion of the repeated calculation within a number, M, or processor clock cycles; wherein the calculation is repeated every P processor clock cycles, where P is a predefined number $P \geq M$.

12. An apparatus comprising:

   an electromagnetically-driven actuator, arranged to apply loads to a structure; and
   an actuator controller for the electromagnetically-driven actuator, wherein the controller comprises program code which, when executed by a processor, performs an actuator control method comprising:

   providing control signals to the actuator and performing an operation using the actuator to apply forces to said structure;
   receiving signals representing monitored changes in one or more parameters of the structure that result from the forces applied to the structure; and
   repeatedly calculating actuator control gains during performance of the operation, in response to the monitored changes in one or more parameters;
   wherein the repeated calculation of actuator control gains is implemented as a set of processor tasks that are each predetermined to complete in a respective determinate number of processor clock cycles for determinate completion of the repeated calculation within a number, M, or processor clock cycles; wherein the calculation is repeated every P processor clock cycles, where P is a predefined number $P \geq M$.

13. An apparatus according to claim 12, wherein the apparatus is a structure testing apparatus and the actuator is arranged to apply loads to a test specimen structure during a test; and wherein the controller includes means for repeated automatic tuning of control gains in response to monitored changes in one or more parameters of the test specimen structure during a test of the test specimen structure.

14. A structure testing apparatus according to claim 13, comprising:

   a test specimen holder;
   a load detector for monitoring the load applied to a test specimen; and
   monitoring apparatus for monitoring one or more parameters of the test specimen as load is applied;
   wherein the electromagnetic actuator is arranged to apply loads to a test specimen held by the holder; and
   wherein the controller is adapted to repeatedly perform, during the test, an automated calculation of forward control path and feedback control path gains for the controller based on the monitored load and monitored one or more parameters, and the controller is adapted to apply the calculated gains to continuously tune operation of the actuator during the test.

15. An apparatus according to any one of claims 12 to 14, wherein the actuator is a direct drive linear electric motor or a direct drive rotary electric motor.

FIG. 1

**FIG. 2**

**FIG. 3**

Load string
stiffness, Ks

Moving mass,
Ms, motor and
damping
parameters Cm,
Cb, Cmin_K

**Block 1**
Estimate natural frequency $\Omega$
and damping factor $\zeta_0$.
Calculate minimum integral
gain kiMin using TkiMin

*200*

Minimum
integral gain
time constant
TkiMin

*210*

Target
PM_vel,
GM_vel

**Block 2**
Calculate highest velocity
feedback kv that achieves
PM_vel above resonance. If
resonance cannot be controlled,
limit Kv to achieve GM_vel at
resonance.

Feedback
delay,
Tdelay

*220*

**Block 3**
Calculate modified damping
factor $\zeta_{kv}$ by including effect
of velocity feedback

*230*

Target
PM, GM

**Block 4.**
Calculate highest stable kp that
achieves PM above resonance.
Calculate largest ki that achieves GM
at resonance

Specimen
stiffness, Kx

*260*

*250*

**Block 5A (for position control)**
Set lower limit on ki using kiMin;
increase kv to balance ki if
PM_vel was achieved

Re-dimension kv, kp and ki to
generate Kv, Kp and Ki.

**Block 5B (for load control)**
Set lower limit on Ki using kiMin;
increase Kv to balance Ki if
PM_vel was achieved.

Set upper limit on Kp using
parameter Mcell; if Kp reduced,
reduce Ki, Kv similarly.

Re-dimension kv, kp and ki to
generate Kv, Kp and Ki.

*240*

**Block 5C (for strain control)**
Set lower limit on Ki using kiMin;
increase Kv to balance Ki if PM_vel was
achieved.

Increase Kp and Ki by ratio (Kx/Ks) up to
a maximum maxStrainGainAmp. If Kp,
Ki limited by maxStrainGainAmp, reduce
Kv proportionally.

Re-dimension kv, kp and ki to generate
Kv, Kp and Ki.

Final feedback
control gains
Kv, Kp, Ki.

**FIG. 4**

## FIG. 5

**Force-displacement curve, nonlinear rubber specimen**

Compliant region,
stiffness around 250N/mm

Stiff region,
stiffness around 2kN/mm

Load [kN]

Displacement [mm]

## FIG. 6

**Estimated Load String Stiffness**

Estimated stiffness [kN/mm]

Displacement [mm]

## FIG. 7

**Comparison of achieved position waveforms for cyclic testing of nonlinear rubber specimen**

Legend:
- Position Command [mm]
- Fixed control (600N/mm tuning)
- Adaptive control (continuous auto-tuning)

Axes: Displacement [mm] vs Time [s]

## FIG. 8

**Comparison of tracking errors for cyclic testing of nonlinear rubber specimen**

Legend:
- Fixed control (600N/mm tuning)
- Adaptive control (continuous auto-tuning)

Axes: Displacement [mm] vs Time [s]

## FIG. 9

Comparison of controlled extension rates, copper pull test at 1mm/s

— Fixed control (tuned to initial stiffness)
- - - Adaptive control (continuous auto-tuning)

Extension rate [mm/s]

Time [s]

## FIG. 10

Stiffness (estimated offline), copper pull test at 1mm/s

Estimated stiffness [kN/mm]

Time [s]

## FIG. 11

Comparison of load-displacement curves, copper pull test at 1mm/s

— Fixed control (tuned to initial stiffness)

– – – Adaptive control (continuous auto-tuning)

Load [kN]

Displacement [mm]

## FIG. 12

Comparison of load-displacement curves, copper pull test (close-up)

— Fixed control (tuned to initial stiffness)

– – – Adaptive control (continuous auto-tuning)

Load [kN]

Displacement [mm]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5511431 A
- EP 0897110 A
- WO 2008023226 A
- US 3206652 A

**Non-patent literature cited in the description**

- Control techniques for structural testing: a review. **PLUMMER A.R.** Proceedings. of the Institution of Mechanical Engineers, Part I: Journal of Systems and Control Engineering. Mechanical Engineering Publications Ltd, 01 March 2007, vol. 221, 139-169
- Adaptive control of materials-testing machines. **CLARKE, D.W. ; HINTON, C.J.** Automatica. Elsevier Science Ltd, 1997, vol. 33, 1119-1131